# EUROPEAN PATENT SPECIFICATION

(11) **EP 3 227 566 B1**
(45) Date of publication and mention of the grant of the patent: **28.11.2018**
(21) Application number: 15711588.2
(22) Date of filing: 06.03.2015
(51) Int. Cl.: F16B 5/02

(54) **FASTENING TOOL WITH EARTH FUNCTION**
BEFESTIGUNGSWERKZEUG MIT ERDUNGSFUNKTION
OUTIL DE FIXATION AVEC FONCTION DE MISE À LA TERRE

(43) Date of publication of application: 11.10.2017
(73) Proprietor: Aoyama Seisakusho Co., Ltd., Oguchi-cho Niwa-gun Aichi 480-0198 (JP)
(72) Inventor: MATSUNAMI, Shigeki, Niwa-gun Aichi 480-0198 (JP); SUZUKI, Yuichiro, Niwa-gun Aichi 480-0198 (JP); KOJIMA, Tsuyoshi, Niwa-gun Aichi 480-0198 (JP)
(74) Representative: Naylor, Matthew John
(86) International application number: PCT/JP2015/001239
(87) International publication number: WO 2016/142964

(56) References cited:
- EP-A1- 1 666 342

## Description

### [Technical Field]

The present invention relates to a fastening tool with an earth function which can realize electrical conduction by breaking an insulating coating layer formed on a surface of a metal member.

### [Background Art]

When members mounted with electrical equipment are attached to a vehicle body, both of the members are desirably electrically conducted to each other so as to ensure an earth of the electrical equipment. Naturally, an earth terminal provided in the electrical equipment can be welded or screwed to the body. In order to reduce cost, however, it is preferable that an earth function be granted to a bolt itself to be used for attachment to the body and electrical conduction is ensured at the same time of the attachment. The bolt to be used for this is called an earth bolt.

In general, a surface of the vehicle body is previously subjected to a painting treatment and thus an insulating coating layer is formed thereon. Therefore, a coating layer peeling unit is formed on the earth bolt to break the insulating coating layer. For example, Patent Document 1 (Japanese Patent No. 5653824) discloses an earth bolt provided with coating layer peeling units which are formed on a male screw portion of the bolt and a seat surface of a head portion of the bolt, respectively. The coating layer peeling unit formed on the male screw portion of the bolt has a function of peeling the coating layer adhered to an inner surface of a screw hole using rotation operation of the bolt, and the coating layer peeling unit formed on the seat surface of the head portion of the bolt has a function of scratchily peeling the insulating coating layer of a member attached by the bolt using the rotation operation of the bolt. The earth bolt described above is used to fasten two members in a closely contact state.

In the following description, two members fastened to each other by a fastening tool according to the invention are called a first member and a second member, respectively. For example, the first member is a member mounted with electrical equipment, and the second member is a body panel of a vehicle. A representative example of the member mounted with the electrical equipment may include an inter panel module on a front surface of a driver's seat.

The first member and the second member are slightly spaced from each other to absorb molding errors or the like. A fastening tool has been known from the past which is used to fasten the first member and the second member spaced slightly from each other as such while keeping a mutual clearance. An example is disclosed in Patent Document 2 (Japanese Patent No. 5388290). The fastening tool includes a female screw member having an inverse screw which is fixed to the first member, a collar bolt screwed with the female screw member, and a fastening bolt for rotating the collar bolt through a torque transmitter.

During the fastening, first, the female screw member is fixed to the first member, and the fastening bolt is inserted into a center hole of the collar bolt from the second member side and is screwed into the center hole in a clockwise direction by an electrical screwdriver or the like. The rotation of the fastening bolt is transmitted to the collar bolt through the torque transmitter to rotate the collar bolt. Since the female screw member has a cut inverse screw (leftward screw), the collar bolt moves toward the second member so as to get out of the female screw member while rotating and abuts on the second member. In this state, the collar bolt cannot rotate anymore and it stops at that position. In the case of further screwing the fastening bolt from this state, the fastening bolt advances alone against the torque transmitter and is screwed with the fastening nut fixed to the first member, so that the first member and the second member are fastened to each other. In this way, the first member and the second member spaced from each other can be fastened to each other while keeping a mutual clearance.

However, the conventional fastening tool described above was not provided with a function as the earth bolt. Therefore, when these fastening tools are used, an earth terminal was necessary to be welded or screwed to the body so as to ensure an earth between the first member and the second member and thus there was a problem that manufacturing costs were increased.

EP 1666342 A discloses a bolt-nut fastening mechanism including a right-hand bolt provided with a metal-to-metal contact locking mechanism on a threaded part, a left-hand bolt provided with an internal screw thread with which the bolt engages, and a fixing nut capable of engaging with the left-hand screw thread of the left-hand bolt.

### [Citation List]

### [Patent Literature]

[PTL 1]
   Japanese Patent No. 5653824
[PTL 2]
   Japanese Patent No. 5388290

### [Summary of Invention]

### [Technical Problem]

Accordingly, an object of the invention is to solve the conventional problems described above, and is to provide a novel fastening tool with an earth function which can fasten the first member and the second member while keeping the mutual clearance and can realize the electrical conduction between the first member and the second member at the same time of the fastening.

### [Solution to Problem]

In order to solve the above problems, the invention is characterized by a fastening tool that fastens a first member and a second member to each other while keeping a mutual clearance, including: a female screw member having an inverse screw that is fixed to the first member; a collar bolt that is screwed with the female screw member; a fastening bolt that is inserted into a center hole of the collar bolt from the second member side and rotates the collar bolt through a torque transmitter, thereby moving the collar bolt to a position colliding with the second member; and a fastening nut that is attached to the first member and is screwed with a male screw of the fastening bolt, wherein an earth claw having elasticity is formed at an outer periphery of an end surface of the collar bolt facing the second member by protruding toward the second member and forming a rear surface thereof into a recess. The earth claw may be configured to bite into the second member in an axial direction due to axial force generated by screwing the fastening bolt with the fastening nut.

In the preferred embodiment of the invention, the torque transmitter may be configured to be plural leaf springs formed around the center hole of the collar bolt. These leaf springs are elastically deformed when the fastening bolt is inserted and thus transmit rotational torque of the fastening bolt to the collar bolt. The collar bolt may include a flange formed on the end surface thereof facing the second member and the earth claw may be plurally formed at an outer periphery of the flange. In addition, the earth claw may be configured to have a shape of obliquely protruding toward an outer periphery from a surface of the flange.

### [Advantageous Effects of Invention]

The fastening tool according to the invention can fasten the first member and the second member to each other while keeping the mutual clearance as in the conventional fastening tool, but the fastening tool according to the invention is different from the conventional fastening tool in terms of forming the earth claw, which protrudes toward the second member and has elasticity in such a manner that the rear surface thereof is formed into the recess, at the outer periphery of the end surface on the second member side of the collar bolt. As described above, when the collar bolt abuts on the second member, the rotation thereof also stops at that position, so that it is not possible to sufficiently peel the insulating coating layer on the second member while rotating as in the earth bolt disclosed in Patent Document 1.

However, when the fastening is finally performed by the fastening bolt, the earth claw having the elasticity is bent and bites into the insulating coating layer on the rear surface of the second member in the axial direction by the axial force, so that the electrical conduction can be realized. Accordingly, only by screwing the fastening bolt using electrical screwdrivers, the fastening tool according to the invention can fasten the first member and the second member to each other while keeping the mutual clearance and can realize the electrical conduction between the first member and the second member at the same time of the fastening.

When the torque transmitter is formed by plural leaf springs, after the collar bolt collided with the second member, the fastening can be complete by rapidly advancing the fastening bolt to the position of the fastening nut while sliding along the surface of the leaf spring, so that it is possible to improve fastening workability.

When the flange is formed on the end surface of the collar bolt facing the second member and the earth claw is plurally formed at the outer periphery of the flange, the earth claws can bite into the insulating coating layer at plural positions spaced from each other, so that it is possible to ensure a stable electrical conduction.

When the earth claw has a shape of obliquely protruding toward the outer periphery from the surface of the flange and the rear surface thereof is formed into the recess, the earth claws can be elastically deformed with a large spring constant, thereby reliably biting into the insulating coating layer.

### [Brief Description of Drawings]

[Fig. 1]

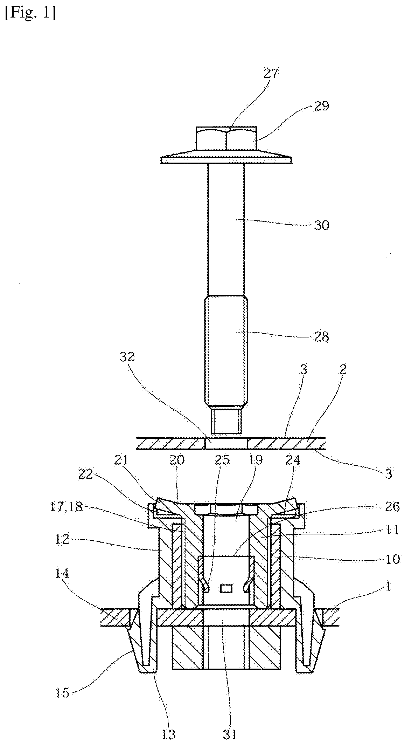

   Fig. 1 is a central vertical sectional view illustrating a state where a fastening tool according to the invention is attached to a first member.
[Fig. 2]

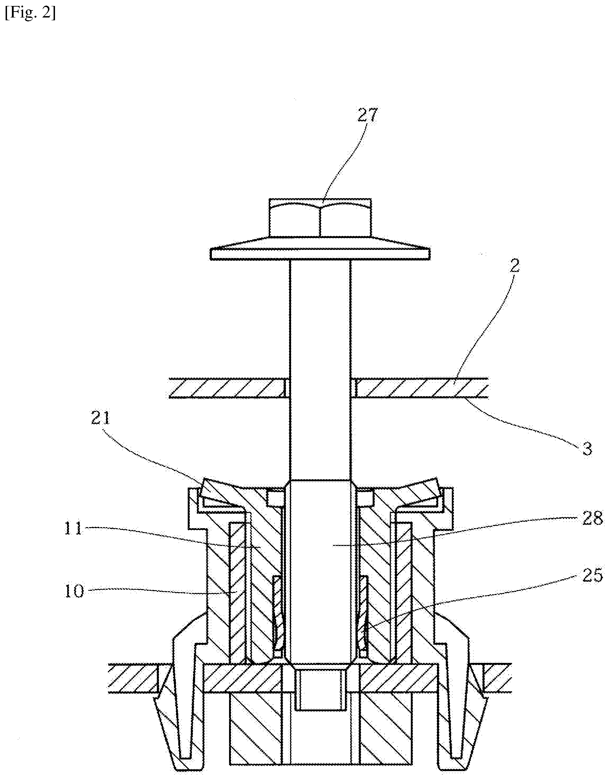

   Fig. 2 is a central vertical sectional view illustrating a state where a fastening bolt is inserted into a collar bolt.
[Fig. 3]

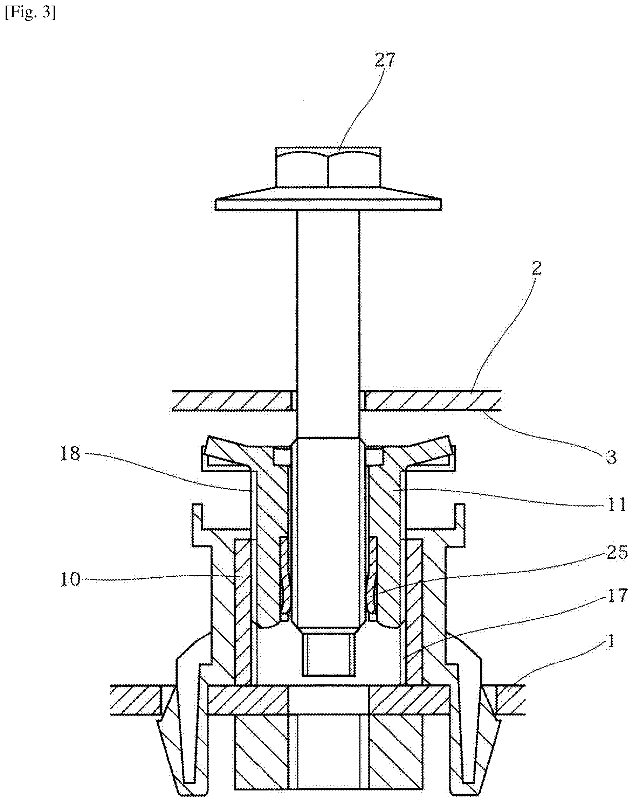

   Fig. 3 is a central vertical sectional view illustrating a state where the collar bolt is moving.
[Fig. 4]

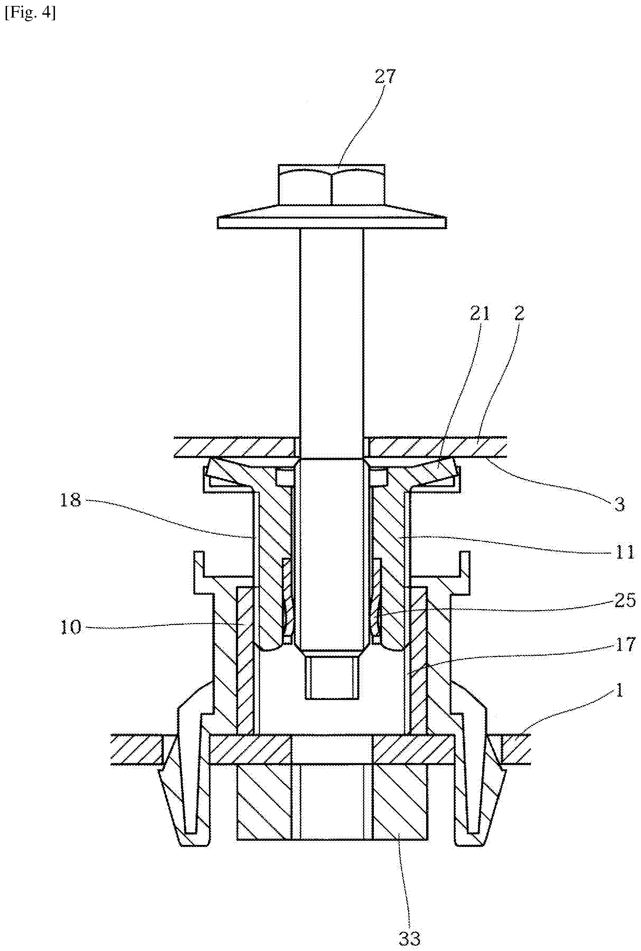

   Fig. 4 is a central vertical sectional view illustrating a state where the collar bolt collides with a second member.
[Fig. 5]

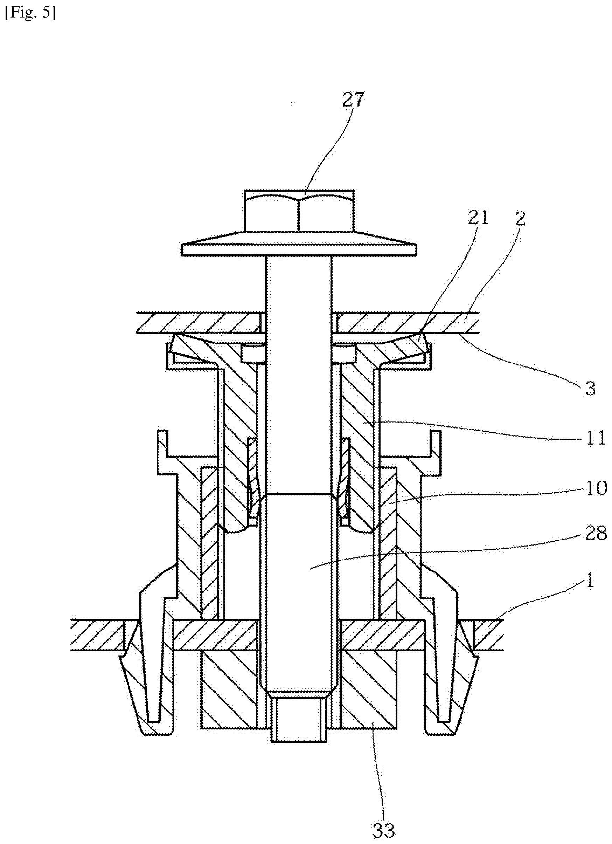

   Fig. 5 is a central vertical sectional view illustrating a state where the fastening bolt starts to be screwed with a fastening nut.
[Fig. 6]

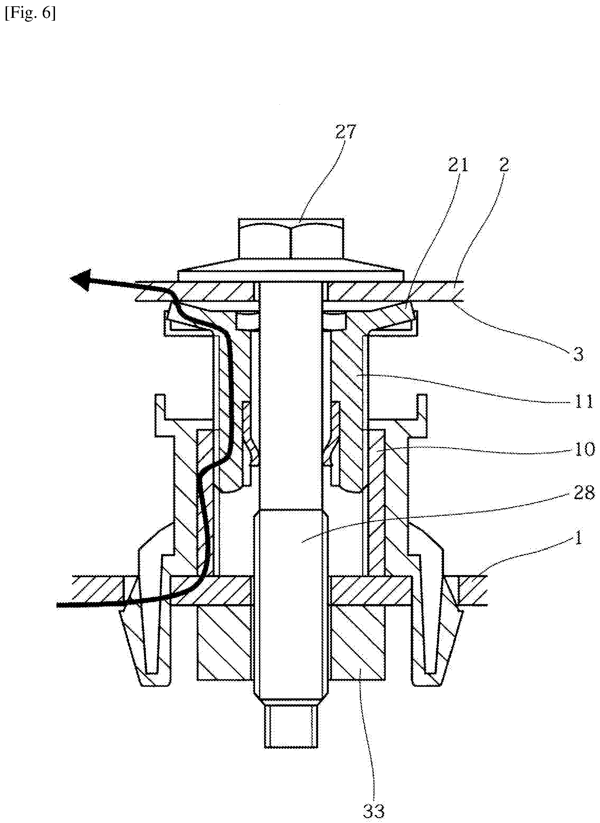

   Fig. 6 is a central vertical sectional view illustrating a state of a fastening completion.
[Fig. 7]

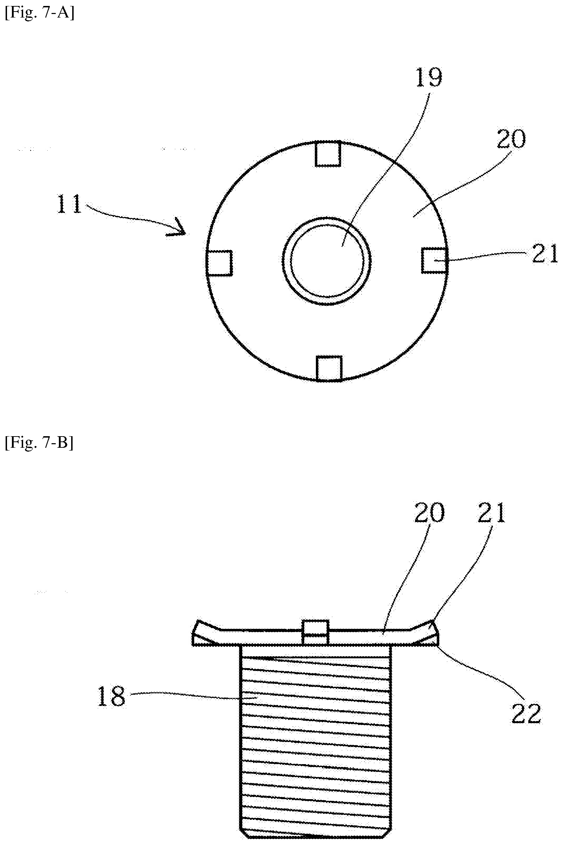

   Figs. 7-A and 7-B are a front view and a plan view of the collar bolt.
[Fig. 8]

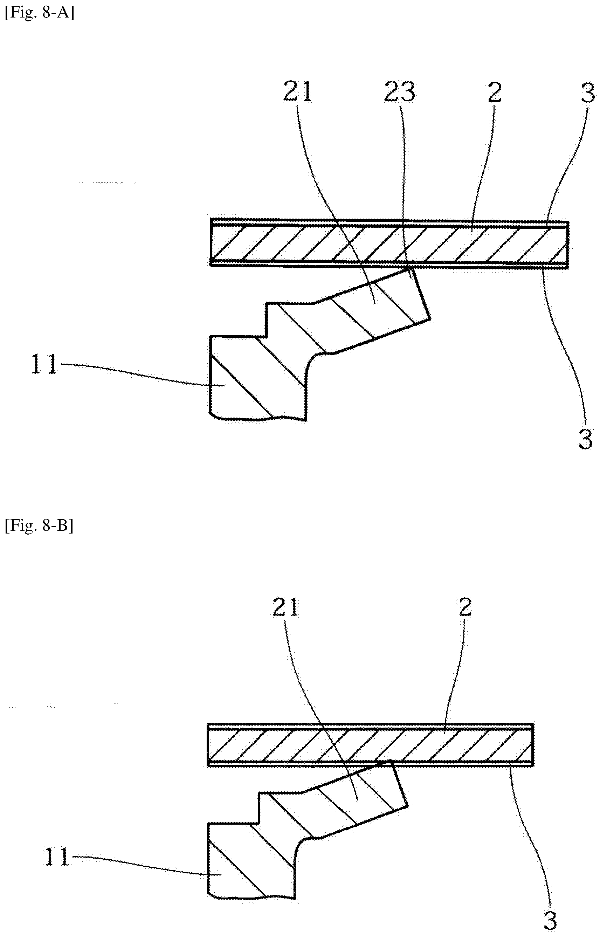

   Figs. 8-A and 8-B are diagrams for describing operation of an earth claw.

### [Description of Embodiments]

An embodiment of the invention will be described below.
Fig. 1 is a central vertical sectional view illustrating a state where a fastening tool according to the invention is attached to a first member 1. A second member 2 is positioned so as to be slightly spaced apart from the first member 1. An insulating coating layer 3 is formed on a surface of the second member. For convenience of description, as illustrated in Fig. 1, the second member 2 is assumed to be on an upper side of the first member 1 in the following description. In this embodiment, the second member is a painted body panel of a vehicle, but is not naturally limited thereto.

Reference numeral 10 represents a cylindrical female screw member, and reference numeral 11 represents a collar bolt which is screwed with the female screw member 10. Both of them are made of metal. In this embodiment, the female screw member 10 is held inside a resinous clip 12. The resinous clip 12 is provided with a pair of leg portions 13 on lower ends thereof, and an elastic claw15 provided with a projection 14 on the outside thereof is projected upward at a tip of the leg portion 13. When the leg portions 13 are inserted and pushed into attachment holes 16 formed on the first member 1, the elastic claws 15 pass through the attachment holes 16 while elastically being deformed inward, the projections 14 come in contact with a rear surface of the first member 1 as illustrated in Fig. 1, and the clip 12 and the female screw member 10 are fixed to an upper surface of the first member 1. In addition, the female screw member 10 can be fixed to the first member 1 using various fixing units which are not principal part of the invention.

A female screw 17 of the female screw member 10 is an inverse screw (leftward screw), and a male screw 18 of the collar bolt 11 is also similar. The collar bolt 11 is a cylindrical body having a center hole 19, and a circular flange 20 is formed on an upper end surface of the collar bolt which faces the second member 2. As illustrated in Figs. 7-A and 7-B, a plurality of earth claws 21 is formed at an outer periphery of the end surface of the flange 20. An inclination angle of the earth claws 21 is preferably 15 to 30 degrees with respect to a flange surface. Each of the earth claws 21 is configured to have elasticity in such a manner that the outer side thereof protrudes upward toward the second member 2 and the rear surface thereof is formed into a recess 22. Four earth claws 21 are formed at equal intervals in this embodiment, but the number of the earth claws is arbitrary and is preferably to be two to six. The outer periphery of the flange 20 is bent upward by press working, thereby forming such an earth claw 21. In addition, since edges 23 of the earth claws 21 are portions which bite into an insulation coating layer, it is preferable to have an aculeate shape. In a state of a fastening start, the collar bolt 11 is deeply screwed into the female screw member 10 in Fig. 1, and the flange 20 is accommodated in a recess 24 formed at a top of the resinous clip 12.

A torque transmitter 25 is provided in a center hole 19 of the collar bolt 11. The torque transmitter 25 can transmit torque up to predetermined torque, but has a function of not transmitting the torque due to slip when exceeding the predetermined torque. In this embodiment, the torque transmitter 25 incudes plural leaf springs. As illustrated in Fig. 1, a part of a peripheral wall of a cylinder 26 is bent inward, thereby forming the leaf spring, and the cylinder 26 is pressed into the center hole 19 of the collar bolt 11. The torque transmitter 25 is a unit which is engaged with a male screw 28 of a fastening bolt 27, which is inserted into the center hole 19 of the collar bolt 11, while being elastically deformed and thus transmits rotational torque of the fastening bolt 27 to the collar bolt 11. The torque transmitter 25 is not limited to the leaf spring, but a conventionally-known resin or various torque transmitters can be used.

An ordinary bolt having a head portion 29 and a shaft portion 30 can be used as the fastening bolt 27. Bolt insertion holes 31 and 32 are formed in the first member 1 and the second member 2, respectively. In addition, a fastening nut 33 is attached to the rear surface of the first member 1. The fastening nut 33 is attached to the first member 1 in an arbitrary manner and may be attached to the rear surface of the first member 1 by, for example, welding.

A fastening method using a fastening tool according to the embodiment will be described below.
First, as illustrated in Fig. 1, the female screw member 10 is fixed to the first member 1 by the clip 12. Next, as illustrated in Fig. 2, the fastening bolt 27 is strongly inserted into the center hole 19 of the collar bolt 11 from the bolt insertion hole 32 of the second member 2, and thus the male screw 28 is engaged with the torque transmitter 25 of the collar bolt 11. As illustrated in Fig. 2, the leaf spring as the torque transmitter 25 is elastically deformed outward and comes in closely contact with the male screw 28 of the fastening bolt 27. When the fastening bolt 27 rotates in a screwing direction (right direction) from this state, the collar bolt 11 also rotates due to the action of the torque transmitter 25, but a screwed portion between the collar bolt 11 and the female screw member 10 is in an inversely screwed (leftward screwed) state. Moreover, the female screw member 10 is fixed to the first member 1. For this reason, the collar bolt 11 moves in an axial direction so as to get out of the female screw member 10 while rotating and advances toward the first member 1 as illustrated in Fig. 3.

When the fastening bolt 27 further rotates, the flange 20 on the upper surface of the collar bolt 11 collides with the rear surface of the second member 2 as illustrated in Fig. 4. When reaching the state illustrated in Fig. 3, the collar bolt 11 can no longer move in the axial direction, so that torque required for rotating the fastening bolt 27 is rapidly raised. Then, when the torque required for rotating the fastening bolt exceeds the transmissible torque of the torque transmitter 25, the torque transmitter 25 malfunctions and the fastening bolt 27 independently moves downward as illustrated in Fig. 5 while being slipped from the surface of the torque transmitter 25. When the torque transmitter 25 is configured by the leaf spring, the fastening bolt 27 can quickly move while being slipped. Then, finally, as illustrated in Fig. 6, the male screw 28 of the fastening bolt 27 is screwed with the fastening nut 33 on the rear surface of the first member 1 and the first member 1 and the second member 2 are fastened to each other while keeping a clearance.

In the state where the collar bolt 11 abuts on the second member 2 as illustrated in Fig. 4, the edge 23 of the earth claw 21 contacts with the second member 2 as illustrated in Fig. 8-A. In this state, the insulating coating layer 3 of the second member 2 has not been broken. In a state of a fastening completion as illustrated in Fig. 6, however, since a large axial force (tightening force in the axial direction) is generated by the fastening, the earth claw 21 is elastically deformed and thus the edge 23 of the earth claw 21 bites into the insulating coating layer 3 of the second member 2 due to reaction force thereof as illustrated in Fig. 8-B. Therefore, it is possible to ensure an electrical conduction with the second member 2. Since the biting is performed in the axial direction by the large axial force due to the fastening, the insulating coating layer 3 can be surely broken.

In the case of using the fastening tool according to the invention as described above, the first member 1 and the second member 2 positioned so as to be spaced apart from each other can be fastened to each other while keeping a mutual clearance. Moreover, the insulating coating layer 3 of the second member 2 is broken by the earth claw 21 at the same time of the fastening and thus the fastening tool and the second member 2 can be electrically conducted to each other. In addition, since the first member 1 has no insulating coating layer on, it can ensure the electrical conduction as indicated by the arrow in Fig. 6 by letting the female screw member 10 contacted to the first member 1. Therefore, it is possible to ensure the electrical conduction between the first member 1 and the second member 2 using the fastening tool according to the invention.

### [References Signs List]

1: first member
2: second member
3: insulating coating layer
10: female screw member
11: collar bolt
12: clip
13: leg portion
14: projection
15: elastic claw
16: attachment hole
17: female screw of female screw member
18: male screw of collar bolt
19: center hole
20: flange
21: earth claw
22: recess
23: edge
24: recess
25: torque transmitter
26: cylinder
27: fastening bolt
28: male screw
29: head portion
30: shaft portion
31: bolt insertion hole
32: bolt insertion hole
33: fastening nut

## Claims

1. A fastening tool with an earth function that fastens a first member (1) and a second member (2) to each other while keeping a mutual clearance, comprising:
a female screw member (10) having an inverse screw that is fixed to the first member (1);
a collar bolt (11) that is screwed with the female screw member (10);
a fastening bolt (27) that is inserted into a center hole of the collar bolt (11) from the second member side and rotates the collar bolt (11) through a torque transmitter (25), thereby moving the collar bolt to a position colliding with the second member (2); and
a fastening nut (33) that is attached to the first member (1) and is screwed with a male screw (28) of the fastening bolt (27),
wherein an earth claw (21) having elasticity is formed at an outer periphery of an end surface of the collar bolt (11) facing the second member (2) by protruding toward the second member (2) and forming a rear surface thereof into a recess (24).

2. The fastening tool with the earth function according to claim 1, wherein the earth claw (21) is configured to bite into the second member (2) in an axial direction due to axial force generated by screwing the fastening bolt (27) with the fastening nut (33).

3. The fastening tool with the earth function according to claim 1, wherein the torque transmitter (25) is configured to be plural leaf springs formed around the center hole of the collar bolt (11).

4. The fastening tool with the earth function according to claim 1, wherein the collar bolt (11) includes a flange (20) formed on the end surface thereof facing the second member (2) and the earth claw (21) is plurally formed at an outer periphery of the flange (20).

5. The fastening tool with the earth function according to claim 4, wherein the earth claw (21) is configured to have a shape of obliquely protruding toward an outer periphery from a surface of the flange (20).

## Patentansprüche

1. Befestigungswerkzeug mit einer Erdungsfunktion, das ein erstes Element (1) und ein zweites Element (2) unter Einhaltung eines gegenseitigen Abstands aneinander befestigt, umfassend:
ein Innengewindeschraubelement (10), das eine inverse Schraube aufweist, die am ersten Element (1) befestigt ist;
einen Bundbolzen (11), der mit dem Innengewindeschraubelement (10) verschraubt ist;
einen Befestigungsbolzen (27), der in ein Mittenloch des Bundbolzens (11) von der zweiten Elementseite eingebracht wird und den Bundbolzen (11) durch einen Drehmomentgeber (25) dreht, wodurch der Bundbolzen in eine mit dem zweiten Element (2) kollidierende Position bewegt wird; und
eine Befestigungsmutter (33), die am ersten Element (1) angebracht und mit einer Außengewindeschraube (28) des Befestigungsbolzens (27) verschraubt ist,
wobei eine Erdungsklaue (21), welche Elastizität aufweist, an einem Außenumfang einer Endoberfläche des Bundbolzens (11) ausgebildet ist, und die dem zweiten Element (2) zugewandt ist, indem sie zum zweiten Element (2) hin vorspringt und aus ihrer hinteren Oberfläche eine Aussparung (24) bildet.

2. Befestigungswerkzeug mit der Erdungsfunktion gemäß Anspruch 1, wobei die Erdungsklaue (21) konfiguriert ist, sich in dem zweiten Element (2) in eine axiale Richtung aufgrund von Axialkraft festzufressen, die durch Verschrauben des Befestigungsbolzens (27) mit der Befestigungsmutter (33) erzeugt wird.

3. Befestigungswerkzeug mit der Erdungsfunktion gemäß Anspruch 1, wobei der Drehmomentgeber (25) konfiguriert ist, mehrere Blattfedern zu sein, die um das Mittenloch des Bundbolzens (11) herum ausgebildet sind.

4. Befestigungswerkzeug mit der Erdungsfunktion gemäß Anspruch 1, wobei der Bundbolzen (11) einen Flansch (20) umfasst, der auf der Endoberfläche desselben ausgebildet ist, der dem zweiten Element (2) zugewandt ist, und die Erdungsklaue (21) mehrfach an einem Außenumfang des Flansches (20) ausgebildet ist.

5. Befestigungswerkzeug mit der Erdungsfunktion gemäß Anspruch 4, wobei die Erdungsklaue (21) konfiguriert ist, eine Form aufzuweisen, die von einer Oberfläche des Flansches (20) zu einem Außenumfang hin schräg vorspringt.

## Revendications

1. Outil de fixation présentant une fonction de mise à la terre qui fixe un premier élément (1) et un second élément (2) l'un à l'autre tout en maintenant un jeu mutuel,
comprenant :
un élément de vis femelle (10) présentant une vis inverse qui est fixée au premier élément (1) ;
un boulon de serrage (11) qui est vissé à l'élément de vis femelle (10) ;
un boulon de fixation (27) qui est inséré dans un trou central du boulon de serrage (11) à partir du côté du second élément et entraîne en rotation le boulon de serrage (11) à travers un transmetteur de couple (25), déplaçant ainsi le boulon de serrage vers une position entrant en collision avec le second élément (2) ; et
un écrou de fixation (33) qui est attaché au premier élément (1) et est vissé avec une vis mâle (28) du boulon de fixation (27),
dans lequel une griffe de mise à la terre (21) présentant une élasticité est formée au niveau d'une périphérie externe d'une surface d'extrémité du boulon de serrage (11) en face du second élément (2) en faisant saillie en direction du second élément (2) et formant une surface arrière de celui-ci dans un évidement (24).

2. Outil de fixation présentant la fonction de mise à la terre selon la revendication 1, dans lequel la griffe de mise à la terre (21) est configurée pour mordre dans le second élément (2) dans une direction axiale en raison d'une force axiale générée par le vissage du boulon de fixation (27) avec l'écrou de fixation (33).

3. Outil de fixation présentant la fonction de mise à la terre selon la revendication 1, dans lequel le transmetteur de couple (25) est configuré pour être de multiples lames de ressort formées autour du trou central du boulon de serrage (11).

4. Outil de fixation présentant la fonction de mise à la terre selon la revendication 1, dans lequel le boulon de serrage (11) comprend une bride (20) formée sur la surface d'extrémité de celui-ci en face du second élément (2) et la griffe de mise à la terre (21) est formée de façon multiple au niveau d'une périphérie externe de la bride (20).

5. Outil de fixation présentant la fonction de mise à la terre selon la revendication 4, dans lequel la griffe de mise à la terre (21) est configurée pour présenter une forme de saillie oblique en direction d'une périphérie externe à partir d'une surface de la bride (20).
